# EUROPEAN PATENT APPLICATION

(11) **EP 4 838 743 A1**
(43) Date of publication of application: **11.11.2026**
(21) Application number: 26175524.3
(22) Date of filing: 29.04.2026
(51) Int. Cl.: H02J 3/38, F03D 7/02, H02J 3/0014

(54) **SYSTEM UND VERFAHREN ZUR VERBESSERUNG DER SYSTEMLEISTUNG WÄHREND SUBSYNCHRONER REGLERSCHWINGUNGEN (SSCI)**

(30) Priority: 09.05.2025 US 202519203727
(71) Applicant: GE Vernova Infrastructure Technology LLC, Greenville, SC 29615 (US)
(72) Inventor: Miranda, Ignacio Vieto, Greenville, SC 29615 (US); Kaur, Jagdeep, Greenville, SC 29615 (US); Howard, Dustin F., Greenville, SC 29615 (US); Lwin, Min Naing, Greenville, SC 29615 (US)
(74) Representative: Zimmermann & Partner Patentanwälte mbB

(57) **Abstract**

A method for improving performance of an electrical power system connected to an electrical grid includes determining, via a control module, a metric based on an error of one or more electrical signals. The method also includes determining, via the control module, a scaling factor based on the metric. Further, the method includes applying, via the control module, the scaling factor to an output of a current damping device to modify a default value for the current damping device. As such, the scaling factor allows the default value to be selected higher and act quicker to sub-synchronous control interactions (SSCI).

## Description

### FIELD

The present disclosure relates generally to electrical power systems and, more particularly, to a system and method for improving performance of electrical power systems during sub-synchronous control interactions (SSCI).

### BACKGROUND

Wind power is considered one of the cleanest, most environmentally friendly energy sources presently available, and wind turbines have gained increased attention in this regard. A modem wind turbine typically includes a tower, a generator, a gearbox, a nacelle, and one or more rotor blades. The rotor blades capture kinetic energy of wind using known airfoil principles. For example, rotor blades typically have the cross-sectional profile of an airfoil such that, during operation, air flows over the blade producing a pressure difference between the sides. Consequently, a lift force, which is directed from a pressure side towards a suction side, acts on the blade. The lift force generates torque on the main rotor shaft, which is geared to the generator for producing electricity. For certain wind turbines, the gearbox steps up the inherently low rotational speed of the rotor for the generator to efficiently convert the rotational mechanical energy to electrical energy, which is fed into a utility grid via at least one electrical connection. Gearless direct drive wind turbines also exist.

Some wind turbine configurations include doubly-fed asynchronous generators (DFAGs). Such configurations may also include power converters that are used to convert a frequency of generated electric power to a frequency substantially similar to a utility grid frequency. Moreover, such converters, in conjunction with the DFAG, also transmit electric power between the utility grid and the generator as well as transmit generator excitation power to a wound generator rotor from one of the connections to the electric utility grid. Alternatively, some wind turbine configurations include, without limitation, alternative types of induction generators, permanent magnet (PM) synchronous generators, electrically-excited synchronous generators, and switched reluctance generators. These alternative configurations may also include power converters that are used to convert the frequencies as described above and transmit electrical power between the utility grid and the generator. A typical wind turbine power converter includes a rotor-side converter connected to a line-side converter via a direct current (DC) link.

At least some known electric utility grids include one or more series-compensated transmission lines. SSCI are a phenomenon that occurs when power-electronic converter controls interact with such series-compensated transmission lines. These interactions can sometimes lead to control instabilities if control systems are not tuned properly or if the control margin of the power converter in properly-tuned control systems is not maintained.

Some wind turbine generators can run in a mode that mitigates SSCI. When operating in this mode, limits of a current regulator associated with synchronous frequencies are expanded from a default value of 0.1 to higher values. This secondary or damping current control is detailed in U.S. Patent No.: 8,310,074 entitled "Method and apparatus for generating power in a wind turbine".

However, setting the limit of the damping current control too high can lead to secondary instability issues. The slip of the wind turbine has been previously identified as relevant to how high the limits on the damping current control can made. Accordingly, U.S. Patent No.: 12,129,833 entitled "System and method for controlling an electrical power system using a dynamic regulator maximum limit" describes the slip of the wind turbine being connected to the limit of the damping control to improve stability.

Accordingly, the present disclosure is directed to systems and methods that correlate the limit of the damping current control to a metric of fundamental frequency stability in addition to slip. Thus, the present disclosure allows the damping controller to be more aggressive in normal operation, while also limiting its own action if the nominal frequency dynamics of the turbine are degraded.

### BRIEF DESCRIPTION

Aspects and advantages of the invention will be set forth in part in the following description, or may be obvious from the description, or may be learned through practice of the invention.

In an aspect, the present disclosure is directed to a method for controlling an electrical power system connected to an electrical grid. The electrical power system has a power converter coupled to a generator and a control module. The control module has a current damping device. The method includes determining, via the control module, a metric based on an error of one or more electrical signals. The method also includes determining, via the control module, a scaling factor based on the metric. Further, the method includes applying, via the control module, the scaling factor to an output of the current damping device to modify a default value for the current damping device, wherein the scaling factor allows the default value to be selected higher and act quicker to SSCI.

In another aspect, the present disclosure is directed to a control module for a power converter of an electrical power system. The control module includes a current damping device. The control module is configured to perform a plurality of operations, including but not limited to determining a metric based on an error of one or more electrical signals, determining a scaling factor based on the metric, and applying, via the control module, the scaling factor to an output of the current damping device to modify a default value for the current damping device, wherein the scaling factor allows the default value to be selected higher and act quicker to SSCI.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of an embodiment of a portion of a wind turbine according to the present disclosure;
FIG. 2 illustrates a schematic view of an embodiment of an electrical and control system that may be used with the wind turbine shown in FIG. 1;
FIG. 3 illustrates a block diagram of an embodiment of a power converter system that may be used with the electrical and control system shown in FIG. 2;
FIG. 4 illustrates a block diagram of an embodiment of a rotor converter control module that may be used with the power converter system shown in FIG. 3;
FIG. 5 illustrates a flow diagram of an embodiment of a method for controlling an electrical power system to improve the performance of the electrical power system during sub-synchronous control interactions (SSCI) according to the present disclosure.
FIG. 6 illustrates a block diagram of an embodiment of a current damping device that may be used with the rotor converter control module shown in FIG. 4;
FIG. 7 illustrates a block diagram of an embodiment of a current damping device generating a scaling factor for a damping control phasor according to the present disclosure; and
FIG. 8 illustrates a detailed, block diagram of an embodiment of a current damping device generating a scaling factor for a damping control phasor according to the present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of an embodiment can be used with another embodiment to yield a still further embodiment. Thus, it is intended that the present invention covers such modifications and variations as come within the scope of the appended claims and their equivalents.

Generally, the present disclosure is directed to systems and methods that correlate the limit of the damping current control to a metric of fundamental frequency stability in addition to slip. In an embodiment, the method includes determining a metric based on an error of one or more electrical signals, associated filters, and/or a sorting stage and determining a scaling factor based on the metric. The scaling factor can then be applied to an output of the current damping device to modify a default value of the current damping device. Accordingly, in an embodiment, using the metric associated with the electrical signal(s) instead of speed has an advantage of acting much quicker, which in turns allows the default value (i.e., limits) of the regulator to be higher. In addition, the metric allows the current damping device to respond to transient dynamics and not just steady state operating conditions. This makes a first action of the current damping device more aggressive, but will reduce its own limits if the system is losing control at the fundamental frequency.

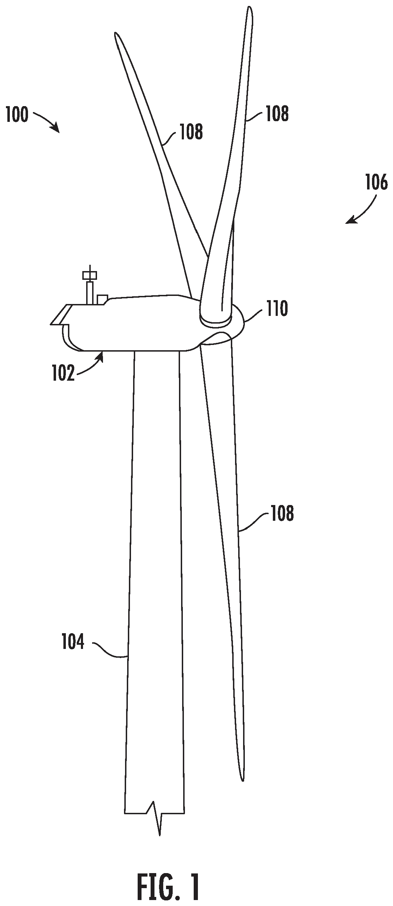

Referring now to the drawings, FIG. 1 illustrates a perspective view of an embodiment of a portion of a wind turbine 100. As shown, the wind turbine 100 includes a nacelle 102 housing a generator (not shown in FIG. 1). The nacelle 102 is mounted on a tower 104 (a portion of tower 104 being shown in FIG. 1). The tower 104 may have any suitable height that facilitates operation of wind turbine 100 as described herein. The wind turbine 100 also includes a rotor 106 that includes three rotor blades 108 attached to a rotating hub 110. Alternatively, the wind turbine 100 includes any number of rotor blades 108 that facilitate operation of the wind turbine 100 as described herein. In an embodiment, the wind turbine 100 includes a gearbox (not shown in FIG. 1) operatively coupled to rotor 106 and a generator (not shown in FIG. 1).

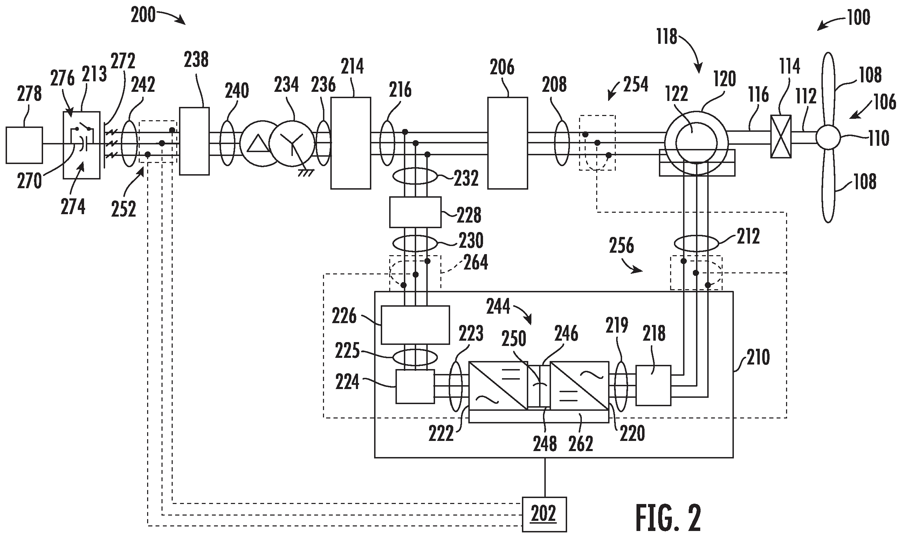

Referring now to FIG. 2, a schematic view of an embodiment of an electrical and control system 200 that may be used with wind turbine 100 is illustrated. The rotor 106 includes the rotor blades 108 coupled to the hub 110. The rotor 106 also includes a low-speed shaft 112 rotatably coupled to hub 110. The low-speed shaft 112 is coupled to a step-up gearbox 114 that is configured to step up the rotational speed of low-speed shaft 112 and transfer that speed to a high-speed shaft 116. Alternatively, the wind turbine 100 may include a direct-drive generator that is rotatably coupled to the rotor 106 without any intervening gearbox.

The high-speed shaft 116 is rotatably coupled to the generator 118. In an embodiment, the generator 118 is a wound rotor, three-phase, double-fed induction (asynchronous) generator (DFIG) that includes a generator stator 120 magnetically coupled to a generator rotor 122. In an alternative embodiment, the generator rotor 122 includes a plurality of permanent magnets in place of rotor windings.

The electrical and control system 200 includes a turbine controller 202 having at least one processor and a memory, at least one processor input channel, at least one processor output channel, and may include at least one computer (none shown in FIG. 2). As used herein, the term computer is not limited to integrated circuits referred to in the art as a computer, but broadly refers to a processor, a microcontroller, a microcomputer, a programmable logic controller (PLC), an application specific integrated circuit, and other programmable circuits (none shown in FIG. 2), and these terms are used interchangeably herein. In an embodiment, memory may include, but is not limited to, a computer-readable medium, such as a random access memory (RAM) (none shown in FIG. 2). Alternatively, one or more storage devices, such as a floppy disk, a compact disc read only memory (CD-ROM), a magneto-optical disk (MOD), and/or a digital versatile disc (DVD) (none shown in FIG. 2) may also be used. Also, in an embodiment, additional input channels (not shown in FIG. 2) may be, but are not limited to, computer peripherals associated with an operator interface such as a mouse and a keyboard (neither shown in FIG. 2). Further, in an embodiment, additional output channels may include, but are not limited to, an operator interface monitor (not shown in FIG. 2).

Processors for turbine controller 202 process information transmitted from a plurality of electrical and electronic devices that may include, but are not limited to, voltage and current transducers. RAM and/or storage devices store and transfer information and instructions to be executed by the processor. RAM and/or storage devices can also be used to store and provide temporary variables, static (i.e., non-changing) information and instructions, or other intermediate information to the processors during execution of instructions by the processors. Instructions that are executed include, but are not limited to, resident conversion and/or comparator algorithms. The execution of sequences of instructions is not limited to any specific combination of hardware circuitry and software instructions.

The generator stator 120 is electrically coupled to a stator synchronizing switch 206 via a stator bus 208. In an embodiment, to facilitate the DFIG configuration, the generator rotor 122 is electrically coupled to a bi-directional power conversion assembly 210 via a rotor bus 212. Alternatively, the generator rotor 122 is electrically coupled to rotor bus 212 via any other device that facilitates operation of the electrical and control system 200 as described herein. As a further alternative, the electrical and control system 200 is configured as a full power conversion system (not shown) known in the art, wherein a full power conversion assembly (not shown in FIG. 2), that is similar in design and operation to power conversion assembly 210, is electrically coupled to generator stator 120, and such full power conversion assembly facilitates channeling electric power between generator stator 120 and an electric power transmission and distribution grid 213.

In an embodiment, the stator bus 208 transmits three-phase power from generator stator 120 to stator synchronizing switch 206. The rotor bus 212 transmits three-phase power from generator rotor 122 to power conversion assembly 210. In an embodiment, the stator synchronizing switch 206 is electrically coupled to a main transformer circuit breaker 214 via a system bus 216. In an alternative embodiment, one or more fuses (not shown) are used instead of main transformer circuit breaker 214. In another embodiment, neither fuses nor main transformer circuit breaker 214 are used.

The power conversion assembly 210 includes a rotor filter 218 that is electrically coupled to generator rotor 122 via rotor bus 212. A rotor filter bus 219 electrically couples the rotor filter 218 to a rotor-side power converter 220, and rotor-side power converter 220 is electrically coupled to a line-side power converter 222. The rotor-side power converter 220 and the line-side power converter 222 are power converter bridges including power semiconductors (not shown). In an embodiment, the rotor-side power converter 220 and the line-side power converter 222 are configured in a three-phase, pulse width modulation (PWM) configuration including insulated gate bipolar transistor (IGBT) switching devices (not shown in FIG. 2) that operate as known in the art. Alternatively, the rotor-side power converter 220 and the line-side power converter 222 have any configuration using any switching devices that facilitate operation of electrical and control system 200 as described herein. The power conversion assembly 210 is coupled in electronic data communication with the turbine controller 202 to control the operation of the rotor-side power converter 220 and the line-side power converter 222.

In an embodiment, a line-side power converter bus 223 electrically couples the line-side power converter 222 to a line filter 224. Also, a line bus 225 electrically couples line filter 224 to a line contactor 226. Moreover, the line contactor 226 is electrically coupled to a conversion circuit breaker 228 via a conversion circuit breaker bus 230. In addition, the conversion circuit breaker 228 is electrically coupled to main transformer circuit breaker 214 via system bus 216 and a connection bus 232. Alternatively, the line filter 224 is electrically coupled to system bus 216 directly via connection bus 232 wherein any protection scheme (not shown) is configured to account for removal of line contactor 226 and conversion circuit breaker 228 from electrical and control system 200. The main transformer circuit breaker 214 is electrically coupled to an electric power main transformer 234 via a generator-side bus 236. The main transformer 234 is electrically coupled to a grid circuit breaker 238 via a breaker-side bus 240. The grid circuit breaker 238 is connected to electric power transmission and distribution grid 213 via a grid bus 242. In an alternative embodiment, main transformer 234 is electrically coupled to one or more fuses (not shown), rather than to grid circuit breaker 238, via breaker-side bus 240. In another embodiment, neither fuses nor grid circuit breaker 238 is used, but rather main transformer 234 is coupled to electric power transmission and distribution grid 213 via breaker-side bus 240 and grid bus 242.

In an embodiment, the rotor-side power converter 220 is coupled in electrical communication with line-side power converter 222 via a single direct current (DC) link 244. Alternatively, the rotor-side power converter 220 and the line-side power converter 222 are electrically coupled via individual and separate DC links (not shown in FIG. 2). The DC link 244 includes a positive rail 246, a negative rail 248, and at least one capacitor 250 coupled between positive rail 246 and negative rail 248. Alternatively, the capacitor 250 includes one or more capacitors configured in series or in parallel between positive rail 246 and negative rail 248.

The turbine controller 202 is configured to receive a plurality of voltage and electric current measurement signals from a first set of voltage and electric current sensors 252. Moreover, the turbine controller 202 is configured to monitor and control at least some of the operational variables associated with wind turbine 100. In an embodiment, each of three voltage and electric current sensors 252 are electrically coupled to each one of the three phases of grid bus 242. Alternatively, voltage and electric current sensors 252 are electrically coupled to system bus 216. As a further alternative, voltage and electric current sensors 252 are electrically coupled to any portion of electrical and control system 200 that facilitates operation of the electrical and control system 200 as described herein. As a still further alternative, the turbine controller 202 is configured to receive any number of voltage and electric current measurement signals from any number of voltage and electric current sensors 252, including, but not limited to, one voltage and electric current measurement signal from one transducer.

As shown in FIG. 2, the electrical and control system 200 also includes a converter controller 262 that is configured to receive a plurality of voltage and electric current measurement signals from a second set of voltage and electric current sensors 254 coupled in electronic data communication with stator bus 208, a third set of voltage and electric current measurement signals from a third set of voltage and electric current sensors 256 coupled in electronic data communication with rotor bus 212, and a fourth set of voltage and electric current measurement signals from a fourth set of voltage and electric current sensors 264 coupled in electronic data communication with conversion circuit breaker bus 230. The second set of voltage and electric current sensors 254 is substantially similar to first set of voltage and electric current sensors 252, and fourth set of voltage and electric current sensors 264 is substantially similar to third set of voltage and electric current sensors 256.

The converter controller 262 is substantially similar to turbine controller 202 and is coupled in electric data communication with turbine controller 202. Moreover, in an embodiment, converter controller 262 is physically integrated within power conversion assembly 210. Alternatively, the converter controller 262 has any configuration that facilitates operation of electrical and control system 200 as described herein.

In an embodiment, the electric power transmission and distribution grid 213 includes one or more transmission lines 270 (only one shown for clarity) that are coupled to grid bus 242 via a grid coupling 272. The transmission lines 270 and/or electric power transmission and distribution grid 213 include one or more series compensation elements 274, such as one or more capacitors, to facilitate reducing reactive power losses within transmission lines 270. As described herein, series compensation elements 274 may create one or more sub-synchronous resonances within electric power transmission and distribution grid 213. The transmission lines 270 and/or electric power transmission and distribution grid 213 also include one or more switches 276 coupled to each series compensation element 274. Switches 276 couple and decouple series compensation elements 274 to and from electric power transmission and distribution grid 213, respectively, as desired. More specifically, switches 276 are opened to couple series compensation elements 274 to electric power transmission and distribution grid 213, and switches 276 are closed to decouple series compensation elements 274 from electric power transmission and distribution grid 213. The electric power transmission and distribution grid 213 is operatively coupled to one or more loads 278 for providing power to loads 278.

During operation, wind impacts the rotor blades 108 and the rotor blades 108 transform wind energy into a mechanical rotational torque that rotatably drives low-speed shaft 112 via hub 110. The low-speed shaft 112 drives gearbox 114 that subsequently steps up the low rotational speed of low-speed shaft 112 to drive high-speed shaft 116 at an increased rotational speed. The high speed shaft 116 rotatably drives generator rotor 122. A rotating magnetic field is induced by generator rotor 122 and a voltage is induced within generator stator 120 that is magnetically coupled to generator rotor 122. The generator 118 converts the rotational mechanical energy to a sinusoidal, three-phase alternating current (AC) electrical energy signal in generator stator 120. The associated electrical power is transmitted to main transformer 234 via stator bus 208, stator synchronizing switch 206, system bus 216, main transformer circuit breaker 214 and generator-side bus 236. The main transformer 234 steps up the voltage amplitude of the electrical power and the transformed electrical power is further transmitted to electric power transmission and distribution grid 213 via breaker-side bus 240, grid circuit breaker 238 and grid bus 242.

In an embodiment, a second electrical power transmission path is provided. Electrical, three-phase, sinusoidal, AC power is generated within generator rotor 122 and is transmitted to power conversion assembly 210 via rotor bus 212. Within power conversion assembly 210, the electrical power is transmitted to rotor filter 218 wherein the electrical power is modified for the rate of change of the output voltage associated with rotor-side power converter 220. The rotor-side power converter 220 acts as a rectifier and rectifies the sinusoidal, three-phase AC power to DC power. The DC power is transmitted into DC link 244. The capacitor 250 facilitates mitigating DC link 244 voltage amplitude variations by facilitating mitigation of a DC ripple associated with AC rectification.

The DC power is subsequently transmitted from the DC link 244 to line-side power converter 222 wherein line-side power converter 222 acts as an inverter configured to convert the DC electrical power from DC link 244 to three-phase, sinusoidal AC electrical power with pre-determined voltages, currents, and frequencies. This conversion is monitored and controlled via converter controller 262. The converted AC power is transmitted from line-side power converter 222 to system bus 216 via line-side power converter bus 223 and line bus 225, line contactor 226, conversion circuit breaker bus 230, conversion circuit breaker 228, and connection bus 232. The line filter 224 compensates or adjusts for harmonic currents in the electric power transmitted from line-side power converter 222. The stator synchronizing switch 206 is configured to close to facilitate connecting the three-phase power from generator stator 120 with the three-phase power from power conversion assembly 210.

The conversion circuit breaker 228, main transformer circuit breaker 214, and grid circuit breaker 238 are configured to disconnect corresponding buses, for example, when current flow is excessive and can damage the components of electrical and control system 200. Additional protection components are also provided, including line contactor 226, which may be controlled to form a disconnect by opening a switch (not shown in FIG. 2) corresponding to each of the lines of line bus 225.

The power conversion assembly 210 compensates or adjusts the frequency of the three-phase power from generator rotor 122 for changes, for example, in the wind speed at hub 110 and rotor blades 108. Therefore, in this manner, mechanical and electrical rotor frequencies are decoupled from stator frequency.

Under some conditions, the bi-directional characteristics of the power conversion assembly 210, and specifically, the bi-directional characteristics of rotor-side power converter 220 and line-side power converter 222, facilitate feeding back at least some of the generated electrical power into generator rotor 122. More specifically, electrical power is transmitted from system bus 216 to connection bus 232 and subsequently through conversion circuit breaker 228 and conversion circuit breaker bus 230 into power conversion assembly 210. Within power conversion assembly 210, the electrical power is transmitted through line contactor 226, line bus 225, and line-side power converter bus 223 into line-side power converter 222. Line-side power converter 222 acts as a rectifier and rectifies the sinusoidal, three-phase AC power to DC power. The DC power is transmitted into DC link 244. The capacitor 250 facilitates mitigating DC link 244 voltage amplitude variations by facilitating mitigation of a DC ripple sometimes associated with three-phase AC rectification.

The DC power is subsequently transmitted from the DC link 244 to the rotor-side power converter 220 wherein the rotor-side power converter 220 acts as an inverter configured to convert the DC electrical power transmitted from the DC link 244 to a three-phase, sinusoidal AC electrical power with pre-determined voltages, currents, and frequencies. This conversion is monitored and controlled via converter controller 262. The converted AC power is transmitted from rotor-side power converter 220 to rotor filter 218 via rotor filter bus 219 and is subsequently transmitted to generator rotor 122 via rotor bus 212, thereby facilitating sub-synchronous operation.

The power conversion assembly 210 is configured to receive control signals from turbine controller 202. The control signals are based on sensed conditions or operating characteristics of wind turbine 100 and electrical and control system 200, received by turbine controller 202 and used to control operation of power conversion assembly 210. Feedback from sensors may be used by electrical and control system 200 to control power conversion assembly 210 via converter controller 262 including, for example, conversion circuit breaker bus 230, stator bus and rotor bus voltages or current feedbacks via second set of voltage and electric current sensors 254, third set of voltage and electric current sensors 256, and fourth set of voltage and electric current sensors 264.

Using this feedback information, for example, switching control signals, stator synchronizing switch control signals and system circuit breaker control (trip) signals may be generated in any known manner. For example, for a grid voltage transient with predetermined characteristics, converter controller 262 will at least temporarily substantially suspend the IGBTs from conducting within line-side power converter 222. Such suspension of operation of line-side power converter 222 will substantially mitigate electric power being channeled through power conversion assembly 210 to approximately zero.

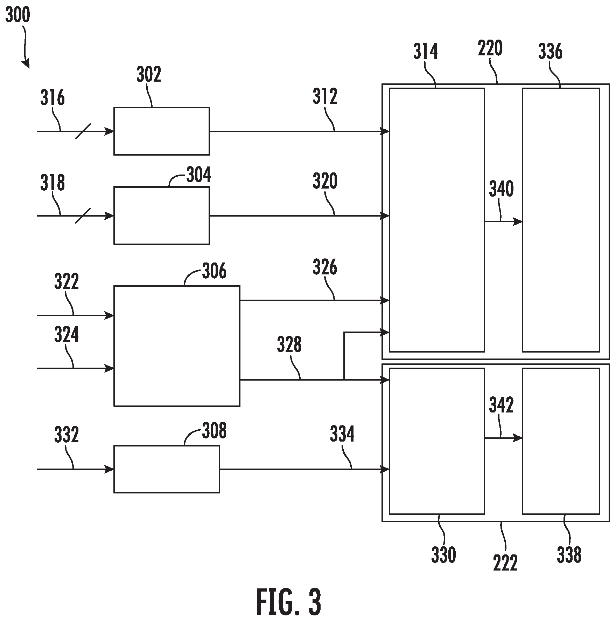

Referring now to FIG. 3, a block diagram of an embodiment of a power converter system 300 that may be used with electrical and control system 200 (shown in FIG. 2) is illustrated according to the present disclosure. As shown, in an embodiment, the power converter system 300 includes the rotor-side power converter 220 and the line-side power converter 222. The power converter system 300 also includes a torque regulator 302, a reactive power regulator 304, a synchronizing phase-locked loop (PLL) 306, and a DC voltage regulator 308.

The torque regulator 302 transmits a first rotor current command signal 312 to rotor-side power converter 220, and more specifically, to a rotor converter control module 314. The first rotor current command signal 312 is used to adjust a rotor current based on a desired generator torque command signal 316 received from turbine controller 202 (shown in FIG. 2). The reactive power regulator 304 receives a stator voltage and reactive power command signal 318 from turbine controller 202 and transmits a second rotor current command signal 320 to rotor converter control module 314. The second rotor current command signal 320 is used to control a power factor of generator 118 (shown in FIG. 2) by adjusting a ratio of real power to reactive power of generator 118. In an embodiment, the torque regulator 302 and the reactive power regulator 304 are housed within converter controller 262 (shown in FIG. 2). In an alternative embodiment, the torque regulator 302 and/or reactive power regulator 304 may be housed within another suitable controller, such as turbine controller 202.

The synchronizing PLL 306 receives a rotor position feedback signal 322 from a rotor position sensor (not shown) and a stator voltage feedback signal 324 from second set of voltage and electric current sensors 254 (shown in FIG. 2). Further, the synchronizing PLL 306 determines a transformation angle signal 326 and a reference angle signal 328 that are used to transform rotor voltages and rotor currents between two or more signal reference frames, such as a time-based reference frame and a phasor-based reference frame. In an embodiment, the transformation angle signal 326 and reference angle signal 328 are used to transform rotor voltages and rotor currents to one or more phasors that include X and Y components of the rotor voltages and/or rotor currents. As used herein, an X component refers to a real component of a phasor, and a Y component refers to an imaginary component of a phasor. The transformation angle signal 326 and reference angle signal 328 are transmitted to rotor converter control module 314 and to a line converter control module 330 that is positioned within line-side power converter 222. The DC voltage regulator 308 receives a DC voltage reference signal 332 that is set, for example, during wind turbine commissioning, and transmits a line current command signal 334 to line converter control module 330. The line current command signal 334 is used to adjust a DC voltage of DC link 244 (shown in FIG. 2).

The rotor converter control module 314 is coupled to a rotor converter switching array 336, and line converter control module 330 is coupled to a line converter switching array 338. In an embodiment, the rotor converter switching array 336 and line converter switching array 338 each includes a plurality of IGBT switching devices (not shown). Alternatively, the rotor converter switching array 336 and/or the line converter switching array 338 include any suitable switching devices that enable rotor-side power converter 220 and line-side power converter 222 to operate as described herein. In an embodiment, the rotor converter control module 314 and the line converter control module 330 use pulse-width modulation to control a duty cycle of a rotor converter switch control signal 340 and of a line converter switch control signal 342, respectively. The rotor converter switch control signal 340 controls a switching behavior of rotor converter switching array 336, and line converter switch control signal 342 controls a switching behavior of line converter switching array 338. As such, the rotor converter switching array 336 and line converter switching array 338 are controlled to produce one or more desired rotor and/or stator voltage and/or current characteristics.

Although not shown in FIG. 3, one or more control components of the power converter system 300 receive one or more feedback signals to facilitate maintaining proper operation of the power converter system 300. Such feedback signals include, without limitation, a DC voltage signal, a three-phase rotor current signal (such as from third set of voltage and electric current sensors 256), a three-phase stator current signal (such as from second set of voltage and electric current sensors 254), a three-phase line current signal (such as from fourth set of voltage and electric current sensors 264), a three-phase stator voltage signal (such as from second set of voltage and electric current sensors 254), and/or a rotor position signal.

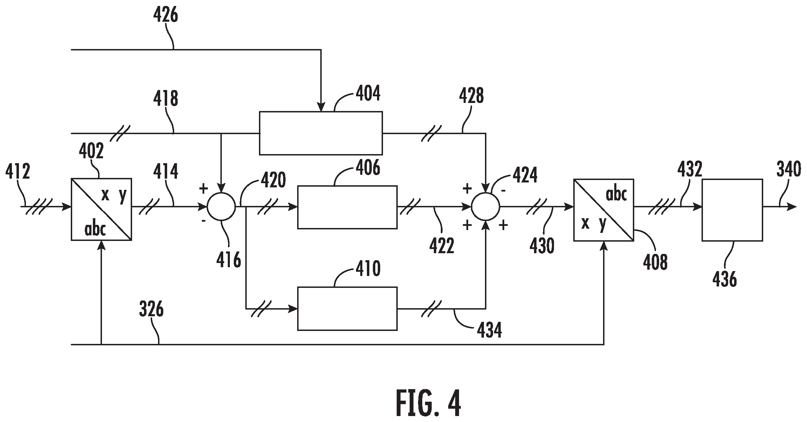

Referring now to FIG. 4, a schematic diagram of an embodiment of the rotor converter control module 314 that may be used with power converter system 300 (shown in FIG. 3) according to the present disclosure. In an embodiment, the rotor converter control module 314 includes a current transform module 402, an impedance feedforward module 404, a regulator module 406, a voltage transform module 408, and a current damping device 410.

The current transform module 402 receives a current feedback signal 412 that includes current measurements from third set of electric current sensors 256 (shown in FIG. 2) of each phase of rotor bus 212 (shown in FIG. 2). In an embodiment, the current feedback signal 412 includes one or more current components from electric power transmission and distribution grid 213 via power converter system 300 and/or via the generator 118 (shown in FIG. 2). In an embodiment, one or more current components may include, for example, one or more sub-synchronous current frequency components and/or one or more grid frequency components that substantially conforms to a frequency of electric power transmission and distribution grid 213. The current transform module 402 receives transformation angle signal 326 and transforms the three-phase instantaneous currents of current feedback signal 412 into a phasor-based reference frame. The current transform module 402 transmits a current feedback phasor 414 to a current feedback comparator 416. The current feedback comparator 416 receives a current command phasor 418, which includes first rotor current command signal 312 and second rotor current command signal 320 (both shown in FIG. 2) and calculates a difference between current feedback phasor 414 and current command phasor 418. The current feedback comparator 416 transmits the resulting difference as a current error phasor 420 to regulator module 406 and to current damping device 410.

The regulator module 406 receives the current error phasor 420 and performs proportional plus integral feedback regulation to adjust an output of the regulator module 406 to facilitate reducing an error of the current error phasor 420 to substantially 0. The regulator module 406 transmits a resulting regulator output phasor 422, which is a voltage phasor signal, to a regulator adder 424.

The impedance feedforward module 404 receives the current command phasor 418 and a slip frequency signal 426. The impedance feedforward module 404 computes an amplitude of a feedforward command phasor 428 as a feedforward voltage phasor signal to supplement a closed-loop current regulation of regulator module 406.

Still referring to FIG. 4, in an embodiment, the current damping device 410 receives the current error phasor 420 and facilitates reducing an amplitude of one or more current frequency components represented by the current error phasor 420. In an embodiment, the one or more current frequency components are sub-synchronous to a current frequency of electric power transmission and distribution grid 213 (shown in FIG. 2). As used herein, the term "sub-synchronous " refers to a frequency that is less than a reference frequency, and in certain embodiments, a frequency that is less than the frequency of electric power transmission and distribution grid 213. The current damping device 410 transmits a resulting damping control phasor 434, which is a voltage phasor signal, to the regulator adder 424.

The regulator adder 424 combines the regulator output phasor 422, the feedforward command phasor 428, and the damping control phasor 434, and transmits a resulting voltage command phasor 430 to the voltage transform module 408. The voltage transform module 408 transforms the voltage command phasor 430 to a time-based reference frame using the transformation angle signal 326, and outputs a resulting three-phase sinusoidal voltage command signal 432. The voltage command signal 432 is modulated by a pulse-width modulation (PWM) module 436. The PWM module 436 transmits rotor converter switch control signal 340 to rotor converter switching array 336 (shown in FIG. 2) to control a switching operation, such as a duty cycle, of the switching devices within rotor converter switching array 336.

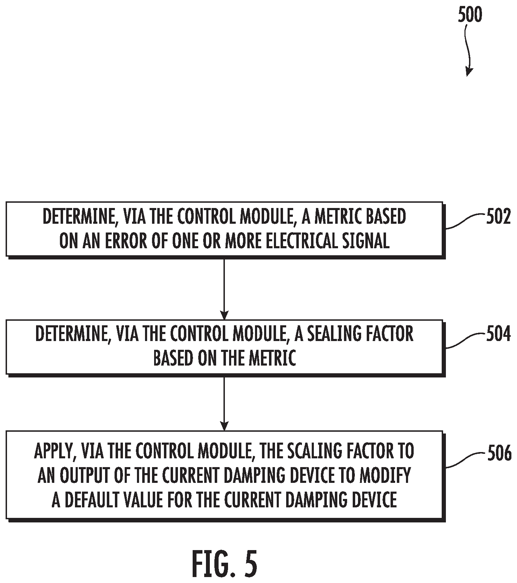

Referring now to FIG. 5, a flow diagram of an embodiment of a method 500 for controlling an electrical power system, such as the electrical and control system 200 described herein, to improve the performance of the electrical power system during sub-synchronous control interactions (SSCI) is illustrated according to the present disclosure. In particular, the method 500 can be implemented with the rotor converter control module 314 and the current damping device 410 described herein. However, it should be appreciated that the method 500 is discussed herein only to describe aspects of the present disclosure and is not intended to be limiting. Further, though FIG. 5 depicts a method having steps performed in a particular order for purposes of illustration and discussion, those of ordinary skill in the art, using the disclosures provided herein, will understand that the steps of any of the methods discussed herein can be adapted, rearranged, expanded, omitted, or modified in various ways without deviating from the scope of the present disclosure.

As shown at (502), the method 500 includes determining, via the control module, a metric based on an error of one or more electrical signals. For example, as further discussed herein, the electrical signal(s) may include frequency signal(s), current signal(s), and/or voltage signal(s). For example, some approaches may use different input signals, such as DC bus voltage feedback signal(s). As shown at (504), the method 500 includes determining, via the control module, a scaling factor based on the metric. As shown at (506), the method 500 includes applying, via the control module, the scaling factor to an output of the current damping device to modify a default value of the current damping device. In such embodiments, the scaling factor allows the default value (i.e., the limits) to be selected higher and act quicker to SSCI.

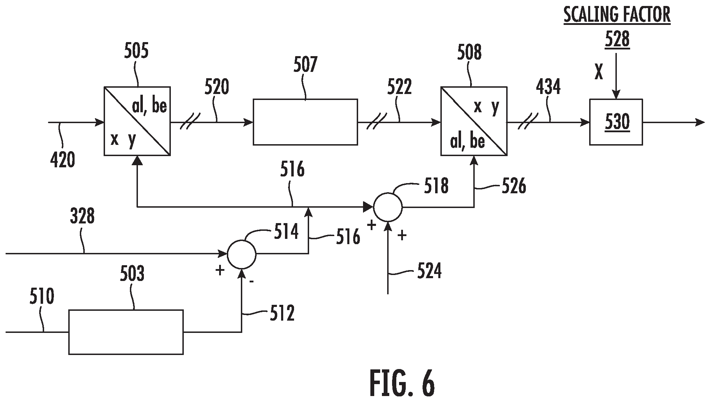

The method 500 of FIG. 5 can be better understood with reference to FIGS. 6-8. In particular, FIG. 6 illustrates a schematic diagram of an embodiment of a portion of the current damping device 410 that may be used with rotor converter control module 314 (shown in FIG. 3) according to the present disclosure. In an embodiment, the current damping device 410 includes an integrator module 503, an input transform module 505, one or more sub-synchronous damping control (SSDC) regulator modules 507, and an output transform module 508. The integrator module 503 receives a predetermined sub-synchronous frequency signal 510 that, in an embodiment, represents one or more predetermined sub-synchronous current frequencies to be damped.

The sub-synchronous frequency signal 510 is selected as a frequency of a reference frame upon which the sub-synchronous frequency of the grid resonance is acted upon by the SSDC regulator module 507. In an embodiment, the reference frame may have a substantially zero frequency, such that a frequency of one or more signals entering SSDC regulator module 507 will be equal to a frequency of signals seen from a stationary reference frame. In another embodiment, the reference frame may be selected to rotate near an anticipated frequency of the sub-synchronous grid resonance. Selection of the appropriate sub-synchronous frequency signal 510 is dependent upon the remainder of the system in which the current damping device 410 is embedded and is done during design studies for tuning the sub-synchronous damping feature of the system.

The integrator module 503 integrates sub-synchronous frequency signal 510 and transmits a resulting sub-synchronous angle signal 512 to a reference angle comparator 514. The reference angle comparator 514 calculates a difference between sub-synchronous angle signal 512 and reference angle signal 328, and outputs a resulting sub-synchronous reference angle signal 516 to input the transform module 505 and to a sub-synchronous orientation adder 518.

The input transform module 505 receives the current error phasor 420 and performs a transformation of the current error phasor 420 using the sub-synchronous reference angle signal 516. More specifically, the input transform module 505 transforms the current error phasor 420 into a rotating reference frame that includes two components, α and β, using Equations (1) and (2) below: $α = x * cos θ + y * sin θ$ (Equation 1) $β = x * = sin θ + y * cos θ$ (Equation 2)
where x is a real component of current error phasor 420,
y is an imaginary component of current error phasor 420, and
θ is sub-synchronous reference angle signal 516.

The rotating reference frame that includes α and β rotates substantially at the frequency of the sub-synchronous current frequency. The input transform module 505 transmits a current error transform signal 520 that includes α and β to SSDC regulator module 507. The current error transform signal 520 includes a frequency component that is substantially equal to the sub-synchronous current frequency. In an embodiment, the SSDC regulator module 507 includes, and/or is configured to perform, a proportional-plus-integral transfer function. Alternatively, the SSDC regulator module 507 includes any suitable transfer function or other algorithm that enables current damping device 410 to operate as described herein. SSDC regulator module 507 integrates and adds a gain to current error transform signal 520. The SSDC regulator module 507 transmits a resulting current sub-synchronous damping transform signal 522 to output transform module 508. The sub-synchronous damping transform signal 522 includes a frequency component that is substantially equal to the sub-synchronous current frequency.

The sub-synchronous orientation adder 518 combines sub-synchronous reference angle signal 516 with an orientation adjustment reference signal 524 and transmits a resulting output orientation signal 526 to the output transform module 508. Selection of orientation adjustment reference signal 524 is dependent upon the remainder of the system in which current damping device 410 is embedded and is done during design studies for tuning the sub-synchronous damping feature of the system. The output orientation signal 526 is used to adjust an orientation of an output phasor generated by output transform module 508. The output transform module 508 transforms current sub-synchronous damping transform signal 522 to a phasor-based reference frame, in a substantially inverse manner as is performed by input transform module 505.

As such, an inverse of Equation (1) is performed on an α component of the sub-synchronous damping transform signal 522, and an inverse of Equation (2) is performed on a β component of sub-synchronous damping transform signal 522. The output transform module 508 outputs a resulting damping control phasor 434 as shown in FIG. 4. The damping control phasor 434 includes a frequency component that is substantially equal to a difference between the frequency of electric power transmission and distribution grid 213 and the sub-synchronous current frequency.

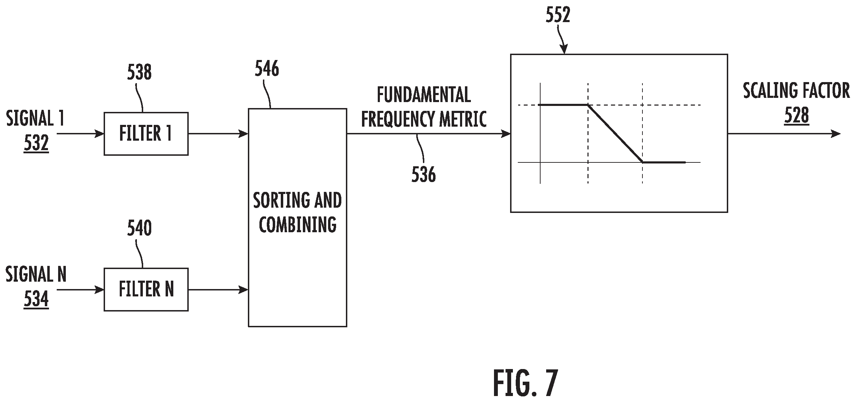

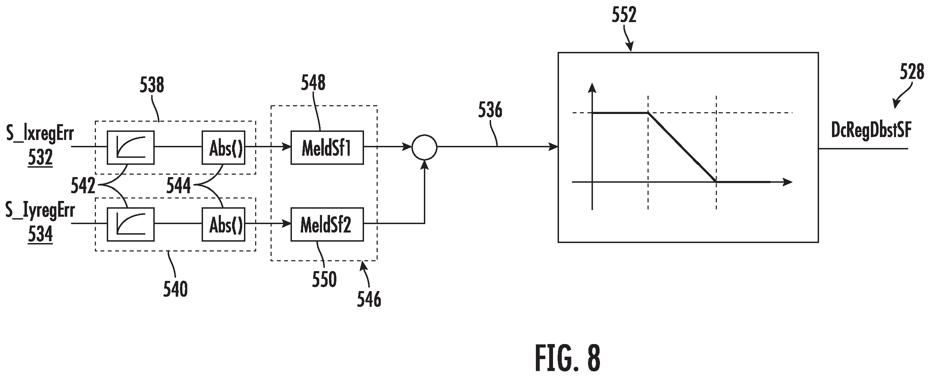

Referring to FIGS. 6-8 and as mentioned, the current damping device 410 is configured to apply a scaling factor 528 (e.g., DcRegDbstSF in FIG. 8) to the damping control phasor 434, e.g., as shown at block 530 (FIG. 6). More specifically, as shown in FIG. 7, the current damping device 410 is further configured to receive one or more electrical signals (e.g., Signal 1, ...Signal n). For example, as shown in FIGS. 7 and 8, the electrical signals may include, at least, a first electrical signal 532 and a second electrical signal 534. In such embodiments, as shown in FIG. 8, the first electrical signal 532 may be an x-axis stator current error (S_IxregErr) and the second electrical signal 534 may be a y-axis stator current error (S_IyregErr).

Furthermore, as shown, the current damping device 410 is configured to determine a metric 536 (e.g., Fundamental Frequency Metric in FIG. 7) based on an error of one or more electrical signals. For example, as shown in FIGS. 7 and 8, the current damping device 410 is configured to receive the first and second electrical signals 532, 534 and filter the first and second electrical signals 532, 534 via respective filter modules 538, 540. In particular embodiments, as shown in FIG. 8, the respective filter modules 538, 540 may include one or more low-pass filters 542 or one or more absolute value blocks 544.

Moreover, as shown, outputs of the respective filter modules 538, 540 can then be sorted and combined via a sorting and combining block 546 to determine the metric 536. For example, in an embodiment, to sort and combine the first and second electrical signals 532, 534, the current damping device 410 may utilize first and second scaling modules 548, 550 to perform a mathematic function to each of the first and second electrical signals 532, 534, respectively. In an embodiment, the mathematic function may be a weighted average with a predefined weighing factor. Still other embodiments may utilize arithmetic or vector summation instead of a weighted average for the sorting and combining stage.

Furthermore, in an embodiment, the current damping device 410 may utilize a lookup table 552 having predetermined values, e.g., based on a stator nameplate current for corresponding the metric 536 with the scaling factor 528. More specifically, as shown, an output of the sorting and combining block 546 may be fed into the lookup table 552 having predetermined values.

Exemplary embodiments of a wind turbine, power converter, and methods of converting power are described above in detail. The methods, wind turbine, and power converter are not limited to the specific embodiments described herein, but rather, components of the wind turbine, components of the power converter, and/or steps of the methods may be utilized independently and separately from other components and/or steps described herein. For example, the power converter and methods may also be used in combination with other wind turbine power systems and methods, and are not limited to practice with only the power system as described herein. Rather, an embodiment can be implemented and utilized in connection with many other wind turbine or power system applications.

Although specific features of various embodiments of the invention may be shown in some drawings and not in others, this is for convenience only. In accordance with the principles of the invention, any feature of a drawing may be referenced and/or claimed in combination with any feature of any other drawing.

Further aspects of the invention are provided by the subject matter of the following clauses:
A method for controlling an electrical power system connected to an electrical grid, the electrical power system having a power converter coupled to a generator and a control module, the control module having a current damping device, the method comprising: determining, via the control module, a metric based on an error of one or more electrical signals; determining, via the control module, a scaling factor based on the metric; and applying, via the control module, the scaling factor to an output of the current damping device to modify a default value for the current damping device, wherein the scaling factor allows the default value to be selected higher and act quicker to SSCI.

The method of any preceding clause, wherein the one or more electrical signals comprise at least one of one or more frequency signals, one or more current signals, or one or more voltage signals.

The method of any preceding clause, wherein the one or more electrical signals comprises a plurality of electrical signals, the plurality of electrical signals comprising, at least, a first electrical signal and a second electrical signal.

The method of any preceding clause, wherein the first electrical signal comprises an x-axis stator current error and the second electrical signal comprises a y-axis stator current error.

The method of any preceding clause, wherein determining the metric based on the error of one or more electrical signals further comprises: receiving the first and second electrical signals; and filtering the first and second electrical signals via respective filter modules.

The method of any preceding clause, wherein the respective filter modules comprise at least one of one or more low-pass filters or one or more absolute value blocks.

The method of any preceding clause, wherein determining the metric based on the error of one or more electrical signals further comprises: sorting and combining the first and second electrical signals

The method of any preceding clause, wherein sorting and combining the first and second electrical signals further comprises: utilizing first and second scaling modules to perform a mathematic function to each of the first and second electrical signals.

The method of any preceding clause, wherein the mathematic function comprises at least one of a weighted average with a predefined weighing factor, an arithmetic summation, or a vector summation.

The method of any preceding clause, wherein determining the scaling factor based on the metric further comprises: utilizing a lookup table having predetermined values based on a stator nameplate current for corresponding the metric with the scaling factor.

The method of any preceding clause, wherein the electrical power system comprises a wind turbine power system.

A control module for a power converter of an electrical power system, the control module comprising a current damping device, the control module configured to perform a plurality of operations, the plurality of operations comprising: determining a metric based on an error of one or more electrical signals; determining a scaling factor based on the metric; and applying, via the control module, the scaling factor to an output of the current damping device to modify a default value for the current damping device, wherein the scaling factor allows the default value to be selected higher and act quicker to SSCI.

The control module of any preceding clause, wherein the one or more electrical signals comprise at least one of one or more frequency signals, one or more current signals, or one or more voltage signals.

The control module of any preceding clause, wherein the one or more electrical signals comprises a plurality of electrical signals, the plurality of electrical signals comprising, at least, a first electrical signal and a second electrical signal.

The control module of any preceding clause, wherein the first electrical signal comprises an x-axis stator current error and the second electrical signal comprises a y-axis stator current error.

The control module of any preceding clause, wherein determining the metric based on the error of one or more electrical signals further comprises: receiving the first and second electrical signals; and filtering the first and second electrical signals via respective filter modules.

The control module of any preceding clause, wherein the respective filter modules comprise at least one of one or more low-pass filters or one or more absolute value blocks.

The control module of any preceding clause, wherein determining the metric based on the error of one or more electrical signals further comprises: sorting and combining the first and second electrical signals.

The control module of any preceding clause, wherein sorting and combining the first and second electrical signals further comprises: utilizing first and second scaling modules to perform a mathematic function to each of the first and second electrical signals, wherein the mathematic function comprises at least one of a weighted average with a predefined weighing factor, an arithmetic summation, or a vector summation.

The control module of any preceding clause, wherein determining the scaling factor based on the metric further comprises: utilizing a lookup table having predetermined values based on a stator nameplate current for corresponding the metric with the scaling factor.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method for controlling an electrical power system connected to an electrical grid, the electrical power system having a power converter coupled to a generator and a control module, the control module having a current damping device, the method comprising:
determining, via the control module, a metric based on an error of one or more electrical signals;
determining, via the control module, a scaling factor based on the metric; and
applying, via the control module, the scaling factor to an output of the current damping device to modify a default value for the current damping device,
wherein the scaling factor allows the default value to be selected higher and act quicker to sub-synchronous control interactions (SSCI).

2. The method of claim 1, wherein the one or more electrical signals comprise at least one of one or more frequency signals, one or more current signals, or one or more voltage signals and/or

3. The method of claim 1, wherein the one or more electrical signals comprises a plurality of electrical signals, the plurality of electrical signals comprising, at least, a first electrical signal and a second electrical signal.

4. The method of claim 3, wherein the first electrical signal comprises an x-axis stator current error and the second electrical signal comprises a y-axis stator current error.

5. The method of claim 3 or 4, wherein determining the metric based on the error of one or more electrical signals further comprises:
receiving the first and second electrical signals; and
filtering the first and second electrical signals via respective filter modules.

6. The method of claim 5, wherein the respective filter modules comprise at least one of one or more low-pass filters or one or more absolute value blocks and/or wherein determining the metric based on the error of one or more electrical signals further comprises:
sorting and combining the first and second electrical signals.

7. The method of claim 6, wherein sorting and combining the first and second electrical signals further comprises:
utilizing first and second scaling modules to perform a mathematic function to each of the first and second electrical signals.

8. The method of claim 7, wherein the mathematic function comprises at least one of a weighted average with a predefined weighing factor, an arithmetic summation, or a vector summation, in particular wherein determining the scaling factor based on the metric further comprises:
utilizing a lookup table having predetermined values based on a stator nameplate current for corresponding the metric with the scaling factor.

9. The method of any of the preceding claims, wherein the electrical power system comprises a wind turbine power system.

10. A control module for a power converter of an electrical power system, the control module comprising a current damping device, the control module configured to perform a plurality of operations, the plurality of operations comprising:
determining a metric based on an error of one or more electrical signals;
determining a scaling factor based on the metric; and
applying, via the control module, the scaling factor to an output of the current damping device to modify a default value for the current damping device,
wherein the scaling factor allows the default value to be selected higher and act quicker to sub-synchronous control interactions (SSCI).

11. The control module of claim 10, wherein the one or more electrical signals comprise at least one of one or more frequency signals, one or more current signals, or one or more voltage signals and/or wherein the one or more electrical signals comprises a plurality of electrical signals, the plurality of electrical signals comprising, at least, a first electrical signal and a second electrical signal.

12. The control module of claim 11, wherein the first electrical signal comprises an x-axis stator current error and the second electrical signal comprises a y-axis stator current error, in particular wherein determining the metric based on the error of one or more electrical signals further comprises:
receiving the first and second electrical signals; and
filtering the first and second electrical signals via respective filter modules.

13. The control module of claim 12, wherein the respective filter modules comprise at least one of one or more low-pass filters or one or more absolute value blocks and/or wherein determining the metric based on the error of one or more electrical signals further comprises:
sorting and combining the first and second electrical signals.

14. The control module of claim 13, wherein sorting and combining the first and second electrical signals further comprises:
utilizing first and second scaling modules to perform a mathematic function to each of the first and second electrical signals, wherein the mathematic function comprises at least one of a weighted average with a predefined weighing factor, an arithmetic summation, or a vector summation.

15. The control module of any of claims 10 to 14, wherein determining the scaling factor based on the metric further comprises:
utilizing a lookup table having predetermined values based on a stator nameplate current for corresponding the metric with the scaling factor.
